(19) Europäisches Patentamt
European Patent Office
Office européen des brevets

(11) **EP 4 094 936 A1**

(12) **EUROPEAN PATENT APPLICATION**
published in accordance with Art. 153(4) EPC

(43) Date of publication:
**30.11.2022 Bulletin 2022/48**

(21) Application number: **21782307.9**

(22) Date of filing: **21.01.2021**

(51) International Patent Classification (IPC):
***B32B 27/00*** $^{(2006.01)}$ ***C09D 183/04*** $^{(2006.01)}$
***C09D 7/20*** $^{(2018.01)}$

(52) Cooperative Patent Classification (CPC):
**B32B 27/00; C09D 7/20; C09D 183/04**

(86) International application number:
**PCT/JP2021/002032**

(87) International publication number:
**WO 2021/199601 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 JP 2020063947**

(71) Applicant: **MAZDA MOTOR CORPORATION**
**Hiroshima 730-8670 (JP)**

(72) Inventors:
- **MAEDA Tetsuya**
  **Aki-gun, Hiroshima 730-8670 (JP)**
- **KATSURA Daiji**
  **Aki-gun, Hiroshima 730-8670 (JP)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **MULTILAYER BODY, METHOD FOR PRODUCING SAME AND COATING COMPOSITION FOR FORMING MOISTURE-ABSORBING FILM**

(57) A laminate having a substrate and a hygroscopic film formed on the surface of the substrate in which the hygroscopic film contains a polysiloxane having a hydrophilic group-containing hydrocarbon group in which the Hansen solubility parameters δP and δH are $3 \leq \delta P \leq 15$ and $3 \leq \delta H \leq 40$.

[FIG. 1]

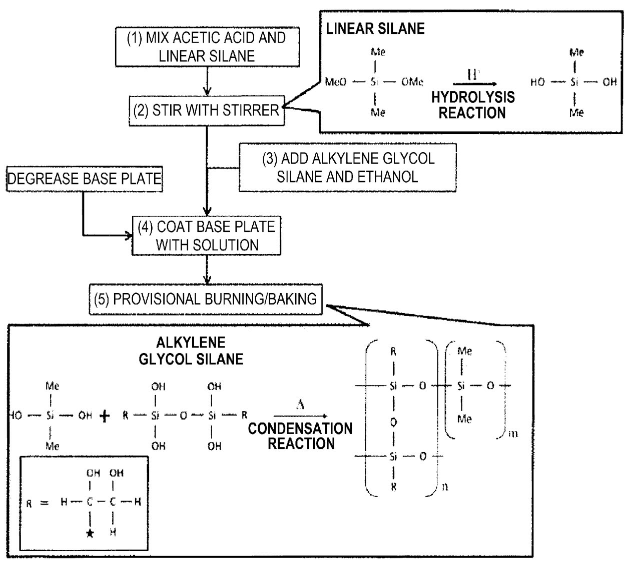


EP 4 094 936 A1

## Description

### Technical Field

The present invention relates to a laminate, a production method thereof and a coating composition for forming a hygroscopic film.

### Background Art

Recently, in view of saving energy, antifogging techniques for preventing condensation on components such as windows in vehicles such as automobiles, trucks, buses and trains have been required. In antifogging techniques, a hygroscopic film is formed on a component such as a window, and thus the water which is about to condense is absorbed in the hygroscopic film. As a result, antifogging is achieved.

Known examples of such a hygroscopic film are a water-absorbing resin layer mainly containing a curable epoxy resin obtained by reacting a composition for forming a water-absorbing resin layer (Patent Literature 1) and a water-absorbing resin layer containing a polyvinyl acetal resin (Patent Literature 2).

### Citation List

### Patent Literature

Patent Literature 1: WO2013/183441
Patent Literature 2: JP-A-2012-117025

### Summary of Invention

### Technical Problem

However, the inventors of the invention have found that the following problems arise with the conventional hygroscopic films.

Because polymers constituting the conventional hygroscopic films have a carbon skeleton, the hygroscopic films are easily scratched and have poor scratch resistance. Possible solutions for improving the scratch resistance are increasing the crosslink density, adding a filler and the like, but the solutions result in a decrease in the hygroscopicity.

Thus, when a hygroscopic film having a polysiloxane skeleton was produced using a silane-based coating composition containing a silane by a conventional method in view of the hygroscopicity and the scratch resistance, new problems, namely precipitation of the coating composition and repelling of the obtained hygroscopic film, arose.

An object of the invention is to provide a laminate having a hygroscopic film having both sufficiently excellent hygroscopicity and scratch resistance and a production method thereof.

Another object of the invention is to provide a laminate having a hygroscopic film which can further sufficiently prevent precipitation of the coating composition or repelling of the hygroscopic film from occurring during the production of the hygroscopic film and which has both sufficiently excellent hygroscopicity and scratch resistance and to provide a production method thereof.

### Solution to Problem

The invention relates to

a laminate having a substrate and a hygroscopic film formed on the surface of the substrate
in which the hygroscopic film contains a polysiloxane having a hydrophilic group-containing hydrocarbon group in which the Hansen solubility parameters $\delta P$ and $\delta H$ satisfy the following relational expressions:

$$3 \leq \delta P \leq 15;$$

and

$$3 \leq \delta H \leq 40.$$

Advantageous Effects of Invention

According to the invention, a laminate having a hygroscopic film having both sufficiently excellent hygroscopicity and scratch resistance can be provided.

Brief Description of Drawings

[Fig. 1] A flow diagram for explaining the operation method for producing a hygroscopic film in the Examples is shown.
[Fig. 2] Fig. 2 is a graph showing the relations between the scratch distance and the penetration depth during scratching and after scratching in the scratch test using the laminate of Example A2.
[Fig. 3] Fig. 3 is a graph showing the relations between the scratch distance and the penetration depth during scratching and after scratching in the scratch test using the laminate of Comparative Example 1.

Description of Embodiments

[Laminate]

The laminate of the invention has a substrate and a hygroscopic film formed on at least a part of the surface of the substrate. The hygroscopic film may be formed on a part of the surface of the substrate, formed on the entire surface of one side of the substrate or formed on the entire surface of the substrate.
The substrate is not particularly limited as long as a hygroscopic film can be formed. For example, the substrate may be composed of an inorganic material, composed of an organic material or composed of a composite material of an inorganic material and an organic material.
The inorganic material is not particularly limited and may be any inorganic material. Examples of the inorganic material include glass, metals, ceramics and the like.
The organic material is not particularly limited and may be any thermosetting polymer and/or any thermoplastic polymer. In view of the heat resistance during the hygroscopic film formation, a thermosetting polymer is generally used.
As the thermosetting polymer, any polymer having thermosetting property can be used. Examples thereof include the following polymers and mixtures thereof:

phenolic resins;
epoxy resins;
melamine resin; and
urea resin.

As the thermoplastic polymer, any polymer having thermoplasticity can be used. Examples thereof include the following polymers and mixtures thereof:

polyolefin resins such as polyethylene and polypropylene and denatured products thereof;
polyester resins such as polyethylene terephthalate (PET), polybutylene terephthalate (PBT), polytrimethylene terephthalate (PTT) and polylactic acid (PLA);
polyacrylate resins such as polymethyl methacrylate resin (PMMA);
polyether resins such as polyether ether ketone (PEEK) and polyphenylene ether (PPE);
polyacetal (POM);
polyphenylene sulfide (PPS);
polyamide resins (PAs) such as PA6, PA66, PA11, PA12, PA6T, PA9T and MXD6;
polycarbonate resins (PCs);
polyurethane resins;
fluoropolymer resins; and
liquid-crystal polymers (LCPs).

In view of the heat resistance to baking during the hygroscopic film formation, the substrate is preferably composed of an inorganic material and/or a thermosetting polymer and more preferably composed of an inorganic

material.

In view of the mechanical strength against shrinkage due to curing of the hygroscopic film, the substrate preferably has Young's modulus of 1 GPa or more. The upper limit of the Young's modulus of the substrate is not particularly limited.

In the present specification, the value measured in accordance with ISO14577 is used as the Young's modulus.

In view of the mechanical strength against shrinkage due to curing of the hygroscopic film, the substrate preferably satisfies the relational expression of substrate thickness/ hygroscopic film thickness ≥ 10 and more preferably satisfies the relational expression of substrate thickness/ hygroscopic film thickness ≥ 100.

The thickness of the substrate is generally 100 μm or more, preferably 500 μm or more, more preferably 1000 μm or more. The upper limit of the thickness of the substrate is not particularly limited, and the thickness of the substrate may be, for example, 10 cm or less.

The hygroscopic film contains a polysiloxane having a hydrophilic group-containing hydrocarbon group in which the Hansen solubility parameters δP and δH satisfy the following relational expressions:

$$3 \leq \delta P \leq 15;$$

and

$$3 \leq \delta H \leq 40.$$

In view of further improvement of the hygroscopicity, the Hansen solubility parameters δP and δH of the hydrophilic group-containing hydrocarbon group which the polysiloxane has are preferably close to the Hansen solubility parameters δP (16 $(J/cm^3)^{1/2}$) and δH (42.3 $(J/cm^3)^{1/2}$) of water, respectively.

When at least one of the δP and the δH of the hydrophilic group-containing hydrocarbon group which the polysiloxane has is too small, the affinity of the hydrophilic group-containing hydrocarbon group as a whole to water decreases despite the hydrophilic group, and thus the hygroscopicity of the hygroscopic film decreases.

When at least one of the δP and the δH of the hydrophilic group-containing hydrocarbon group which the polysiloxane has is too large, the hydrolysis reaction of the silane and the dehydration condensation reaction go out of control during the production of the hygroscopic film, and the production of the hygroscopic film becomes difficult.

In view of further improvement of the hygroscopicity and the scratch resistance of the hygroscopic film and prevention of precipitation during the polysiloxane synthesis and repelling during the hygroscopic film formation, the δP of the hydrophilic group-containing hydrocarbon group which the polysiloxane has is preferably 4 to 15 $(J/cm^3)^{1/2}$, more preferably 5 to 15 $(J/cm^3)^{1/2}$, further preferably 10 to 15 $(J/cm^3)^{1/2}$, most preferably 12 to 15 $(J/cm^3)^{1/2}$.

In view of further improvement of the hygroscopicity and the scratch resistance of the hygroscopic film and prevention of precipitation during the polysiloxane synthesis and repelling during the hygroscopic film formation, the δH of the hydrophilic group-containing hydrocarbon group which the polysiloxane has is preferably 4 to 40 $(J/cm^3)^{1/2}$, more preferably 10 to 30 $(J/cm^3)^{1/2}$, further preferably 15 to 30 $(J/cm^3)^{1/2}$, most preferably 26 to 29 $(J/cm^3)^{1/2}$.

The Hansen solubility parameters (HSPs) (δ) are parameters considering the polarity (for example, the solubility) of a substance based on the three components of the dispersion force (δD) (the energy from dispersion force), the polarity (δP) (the energy from dipolar interaction) and the hydrogen bonds (δH) (the energy from hydrogen bonds) and have the relation "$\delta^2 = (\delta D)^2 + (\delta P)^2 + (\delta H)^2$". In the invention, the δP and the δH of the hydrophilic group-containing hydrocarbon group which the polysiloxane has were focused on in view of the hygroscopicity to water, and thus a hygroscopic film having excellent hygroscopicity and scratch resistance was found. At this point, by further focusing on the amount of a siloxane unit (especially, the siloxane unit (I) below) having a hydrophilic group-containing hydrocarbon group in the polysiloxane, it was found that the hygroscopicity and the scratch resistance of the hygroscopic film improve and that precipitation of the coating composition and repelling of the hygroscopic film can be further sufficiently prevented from occurring during the production of the hygroscopic film. Accordingly, while the effect regarding the hygroscopicity and the scratch resistance of the hygroscopic film in the invention is an effect that the invention always has, the effect of preventing precipitation of the coating composition and repelling of the hygroscopic film during the production of the hygroscopic film is not an effect that the invention always has but is an effect which the invention does not have to have and is an effect that the invention preferably has.

As the Hansen solubility parameters δP and δH of the hydrophilic group-containing hydrocarbon group, specifically, the Hansen solubility parameters δP and δH of the hydrophilic group-containing hydrocarbon compound in which the bond which is bonded to the silicon atom of the siloxane skeleton in the hydrophilic group-containing hydrocarbon group is bonded to a hydrogen atom instead of the silicon atom are used. The atom which is bonded to the silicon atom of the siloxane skeleton in the hydrophilic group-containing hydrocarbon group is a carbon atom or a nitrogen atom. As

the Hansen solubility parameters δP and δH of such a hydrophilic group-containing hydrocarbon compound, the values calculated under the following conditions are used.

Computer software: HSPiP (Hansen Solubility parameters) ver.5

The hydrophilic group-containing hydrocarbon group means a hydrocarbon group containing a hydrophilic group and may be a hydrophilic group containing a hydrocarbon group. The hydrophilic group-containing hydrocarbon group is a side chain group (especially the entire group) which is directly bonded to the siloxane skeleton (especially to the silicon atom constituting the skeleton) which the polysiloxane has, and the atom which is bonded to the silicon atom of the siloxane skeleton may be a carbon atom or may be a nitrogen atom. When the polysiloxane has a hydrophilic group in the form of a hydrophilic group-containing hydrocarbon group having the certain Hansen solubility parameters δP and δH in this manner, the catalytic action of the hydrophilic group (namely the reactivity of the dehydration condensation reaction for forming a siloxane bond) decreases moderately. As a result, the consumption of the hydrophilic group is significantly suppressed, and thus the hygroscopicity of the hygroscopic film improves. Moreover, because the polysiloxane has a siloxane skeleton, the scratch resistance improves. For example, when the polymer constituting the hygroscopic film is a polymer having a carbon skeleton (for example, a curable epoxy resin or a vinyl acetal resin) instead of a polysiloxane (namely a siloxane skeleton), the scratch resistance decreases.

In view of further improvement of the hygroscopicity and the scratch resistance of the hygroscopic film and prevention of precipitation during the polysiloxane synthesis and repelling during the hygroscopic film formation, in the hydrophilic group-containing hydrocarbon group, the atom which is directly bonded to the silicon atom of the siloxane skeleton is preferably a carbon atom. Here, the hydrophilic group-containing hydrocarbon group contains at least a hydrophilic group and a hydrocarbon group which is between the hydrophilic group and the siloxane skeleton, and the hydrophilic group is bonded to the silicon atom of the siloxane skeleton through the hydrocarbon group. When the hydrophilic group-containing hydrocarbon group is directly bonded to the silicon atom of the siloxane skeleton at the carbon atom thereof, the catalytic action of the hydrophilic group (namely the reactivity of the dehydration condensation reaction for forming a siloxane bond) decreases more moderately. As a result, the consumption of the hydrophilic group is further significantly suppressed, and thus the hygroscopicity of the hygroscopic film is believed to further improve.

In the present specification, the hygroscopicity is the feature of the hygroscopic film of being able to absorb liquid or gaseous water and is a feature based on the water absorption rate of the hygroscopic film. The hygroscopicity includes antifogging property and humidity-controlling property. The antifogging property is the feature of preventing condensation of water through absorption of liquid or gaseous water by the hygroscopic film. The humidity-controlling property is the feature capable of adjusting the humidity of the ambient environment through absorption of liquid or gaseous water by the hygroscopic film and release of the liquid or gaseous water absorbed by the hygroscopic film.

The scratch resistance means the feature of the hygroscopic film of not easily undergoing plastic deformation even by an external force and is different from the feature of not easily being scratched simply due to high hardness. Specifically, when an object deforms through application of an external force, the deformation generally includes elastic deformation, which can be reversed to the original state, and plastic deformation, which cannot be reversed to the original state. The hygroscopic film of the invention has a feature capable of significantly converting at least a part of the plastic deformation due to an external force into elastic deformation, and thus the plastic deformation is reduced sufficiently.

The hydrophilic group means a functional group which has relatively excellent affinity to water molecules and may be a monovalent organic group or a divalent organic group. Specific examples of the hydrophilic group include, for example, monovalent hydrophilic groups such as a hydroxyl group (namely -OH), an amino group (namely $-NH_2$), a mercapto group (namely -SH), a sulfonic group (namely - $SO_3H$) and a carboxyl group (namely -COOH) and divalent hydrophilic groups such as an imino group (namely -NH-), a ketone group (namely -CO-) and an ether group (namely -O-).

When the hydrophilic group-containing hydrocarbon group contains a hydrophilic group and a hydrocarbon group which is between the hydrophilic group and the siloxane skeleton, the hydrocarbon group is a divalent linking group for linking the hydrophilic group and the silicon atom of the siloxane skeleton (sometimes simply called "linking hydrocarbon group" below). The linking hydrocarbon group may be a divalent saturated or unsaturated aliphatic hydrocarbon group or may be a divalent aromatic hydrocarbon group. In view of further improvement of the hygroscopicity and the scratch resistance, the linking hydrocarbon group is preferably a divalent saturated aliphatic hydrocarbon group or a divalent aromatic hydrocarbon group, more preferably a divalent saturated aliphatic hydrocarbon group. Specific examples of the divalent saturated aliphatic hydrocarbon group include, for example, linear and branched alkylene groups having 1 to 10, preferably 1 to 7, more preferably 1 to 5 carbon atoms. Specific examples of the divalent unsaturated aliphatic hydrocarbon group include, for example, linear and branched alkenylene groups having 1 to 10, preferably 1 to 7, more preferably 1 to 5 carbon atoms. Specific examples of the divalent aromatic hydrocarbon group include, for example, arylene groups having 6 to 14, preferably 6 to 10, more preferably 6 carbon atoms.

Specific examples of the hydrophilic group-containing hydrocarbon group include hydrophilic group-containing hydrocarbon groups represented by the following general formulae (i) to (vi). Hydrophilic group-containing hydrocarbon

groups represented by the following general formulae (i) and (iv) to (vi) are preferable, and a hydrophilic group-containing hydrocarbon group represented by the following general formula (i) is more preferable.

[Chem. 1]

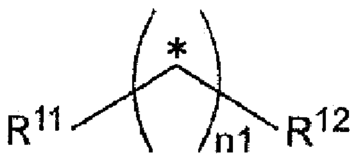
(i)

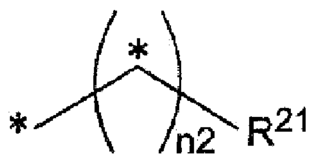
(ii)

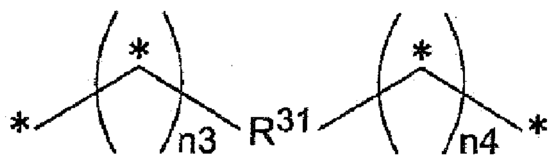
(iii)

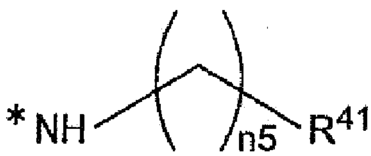
(iv)

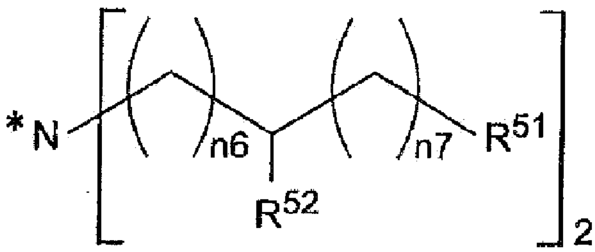
(v)

$^{*}N\,R^{61}{}_{3}{}^{+}A^{-}$ (vi)

* in the formulae (i) to (iii) represents a carbon atom which can have a bond. When there is one carbon atom having * in one molecule, the carbon atom is directly bonded to the silicon atom of the siloxane skeleton. When there are two or more carbon atoms having * in one molecule, any one carbon atom of the carbon atoms is directly bonded to the silicon atom of the siloxane skeleton. In view of further improvement of the hygroscopicity and the scratch resistance, the carbon atom which is directly bonded to the silicon atom of the siloxane skeleton is preferably also directly bonded to the hydrophilic group.

* in the formulae (iv) to (vi) represents a nitrogen atom which can have a bond. The nitrogen atom having * is directly bonded to the silicon atom of the siloxane unit.

In the formulae (i) to (vi), $R^{11}$, $R^{12}$, $R^{21}$, $R^{41}$, $R^{51}$ and $R^{52}$ are each independently a monovalent hydrophilic group selected from the group consisting of a hydroxyl group, an amino group, a mercapto group, a sulfonic group and a carboxyl group. In view of further improvement of the hygroscopicity and the scratch resistance, a hydroxyl group and

an amino group are preferable, and a hydroxyl group is more preferable.

$R^{31}$ is each independently a divalent hydrophilic group selected from the group consisting of an imino group, a ketone group and an ether group and is, in view of further improvement of the hygroscopicity and the scratch resistance, preferably an imino group.

Each $R^{61}$ is a monovalent hydrocarbon group. Specifically, $R^{61}$ may be a monovalent saturated or unsaturated aliphatic hydrocarbon group or may be a monovalent aromatic hydrocarbon group. In view of further improvement of the hygroscopicity and the scratch resistance, $R^{61}$ is preferably a monovalent saturated aliphatic hydrocarbon group or a monovalent aromatic hydrocarbon group, more preferably a monovalent saturated aliphatic hydrocarbon group. Examples of the monovalent saturated aliphatic hydrocarbon group include linear and branched alkyl groups (especially linear alkyl groups) having 1 to 10, preferably 1 to 7, more preferably 1 to 5, further preferably 1 to 3 carbon atoms. Specific examples of such an alkyl group include, for example, a methyl group, an ethyl group, a propyl group, a butyl group, a pentyl group, a hexyl group, a heptyl group, an octyl group, a nonyl group, a decyl group and the like. Examples of the monovalent unsaturated aliphatic hydrocarbon group include linear and branched alkenyl groups having 2 to 10, preferably 2 to 7, more preferably 2 to 5, further preferably 2 or 3 carbon atoms. Specific examples of such an alkenyl group include, for example, a vinyl group and the like. Examples of the monovalent aromatic hydrocarbon group include aryl groups having 6 to 14, preferably 6 to 10, more preferably 6 carbon atoms. Specific examples of such an aryl group include, for example, a phenyl group, a naphthyl group and the like. The $R^{61}$'s may be each independently selected.

n1 and n5 are each independently an integer of 1 to 10 and are, in view of further improvement of the hygroscopicity and the scratch resistance, preferably an integer of 1 to 7, more preferably an integer of 1 to 5.

n2, n3, n4, n6 and n7 are each independently an integer of 0 to 10 and are, in view of further improvement of the hygroscopicity and the scratch resistance, preferably an integer of 0 to 7, more preferably an integer of 0 to 5.

$A^-$ is an anion. The anion is a monovalent anion and may be, for example, $Cl^-$, $NO_3^-$, $SO_4^-$, $PO_4^-$ or the like. A preferable anion is $Cl^-$.

In the formula (i), in view of further improvement of the hygroscopicity and the scratch resistance, the following is preferable:

$R^{11}$ and $R^{12}$ are each independently a monovalent hydrophilic group selected from the group consisting of a hydroxyl group, an amino group, a mercapto group, a sulfonic group and a carboxyl group, preferably a hydroxyl group or an amino group, more preferably a hydroxyl group;
$R^{11}$ and $R^{12}$ are preferably same groups; and
n1 is preferably an integer of 1 to 5, more preferably an integer of 1 to 3.

A specific example of the hydrophilic group-containing hydrocarbon group of the formula (i) is shown below. In this regard, also in the following specific example, * represents a carbon atom which can have a bond as in the formulae (i) to (iii). When there is one carbon atom having * in one molecule, the carbon atom is directly bonded to the silicon atom of the siloxane skeleton. When there are two or more carbon atoms having * in one molecule, any one carbon atom of the carbon atoms is directly bonded to the silicon atom of the siloxane skeleton. In the specific examples of the hydrophilic group-containing hydrocarbon groups of the formulae (ii) to (iii) below, * also represents a carbon atom which can have a bond.

[Chem. 2]

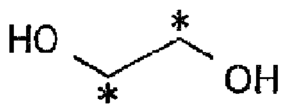 (i-1)

The Hansen solubility parameters δP and δH of the hydrophilic group-containing hydrocarbon group (i-1) are 13.5 $(J/cm^3)^{1/2}$ and 27.4 $(J/cm^3)^{1/2}$, respectively.

In the formula (ii), in view of further improvement of the hygroscopicity and the scratch resistance, the following is preferable:

$R^{21}$ is a monovalent hydrophilic group selected from the group consisting of a hydroxyl group, an amino group, a mercapto group, a sulfonic group and a carboxyl group, preferably a hydroxyl group or an amino group, more preferably a hydroxyl group; and
n2 is preferably an integer of 0 to 5, more preferably an integer of 0 to 3.

Specific examples of the hydrophilic group-containing hydrocarbon group of the formula (ii) are shown below.

[Chem. 3]

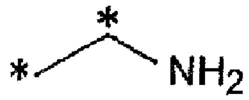
(ii-1)

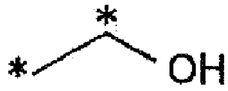
(ii-2)

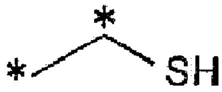
(ii-3)

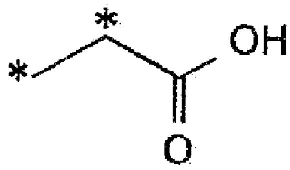
(ii-4)

The Hansen solubility parameters δP and δH of the hydrophilic group-containing hydrocarbon group (ii-1) are 6.3 $(J/cm^3)^{1/2}$ and 10.0 $(J/cm^3)^{1/2}$, respectively.

The Hansen solubility parameters δP and δH of the hydrophilic group-containing hydrocarbon group (ii-2) are 9.3 $(J/cm^3)^{1/2}$ and 17.2 $(J/cm^3)^{1/2}$, respectively.

The Hansen solubility parameters δP and δH of the hydrophilic group-containing hydrocarbon group (ii-3) are 6.2 $(J/cm^3)^{1/2}$ and 6.3 $(J/cm^3)^{1/2}$, respectively.

The Hansen solubility parameters δP and δH of the hydrophilic group-containing hydrocarbon group (ii-4) are 5.9 $(J/cm^3)^{1/2}$ and 13 $(J/cm^3)^{1/2}$, respectively.

In the formula (iii), in view of further improvement of the hygroscopicity and the scratch resistance, the following is preferable:

$R^{31}$ is a divalent hydrophilic group selected from the group consisting of an imino group, a ketone group and an ether group, preferably a ketone group or an ether group; and

n3 and n4 are each independently preferably an integer of 0 to 5, more preferably an integer of 0 to 3, further preferably an integer of 0 or 1.

Specific examples of the hydrophilic group-containing hydrocarbon group of the formula (iii) are shown below.

[Chem. 4]

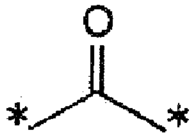
(iii-1)

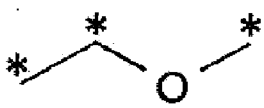
(iii-2)

The Hansen solubility parameters δP and δH of the hydrophilic group-containing hydrocarbon group (iii-1) are 9.1 $(J/cm^3)^{1/2}$ and 6.5 $(J/cm^3)^{1/2}$, respectively.

The Hansen solubility parameters δP and δH of the hydrophilic group-containing hydrocarbon group (iii-2) are

5.5 $(J/cm^3)^{1/2}$ and 5.0 $(J/cm^3)^{1/2}$, respectively.

In the formula (iv), in view of further improvement of the hygroscopicity and the scratch resistance, the following is preferable:

$R^{41}$ is a monovalent hydrophilic group selected from the group consisting of a hydroxyl group, an amino group, a mercapto group, a sulfonic group and a carboxyl group, preferably a hydroxyl group or an amino group, more preferably an amino group; and
n5 is preferably an integer of 1 to 5, more preferably an integer of 1 to 3.

A specific example of the hydrophilic group-containing hydrocarbon group of the formula (iv) is shown below. In this regard, also in the following specific example, * represents a nitrogen atom which can have a bond as in the formulae (iv) to (vi). The nitrogen atom having * is directly bonded to the silicon atom of the siloxane skeleton. In the specific examples of the hydrophilic group-containing hydrocarbon groups of the formulae (v) to (vi) below, * also represents a nitrogen atom which can have a bond.

[Chem. 5]

$$*NH-C_2H_4-NH_2 \qquad \text{(iv-1)}$$

The Hansen solubility parameters δP and δH of the hydrophilic group-containing hydrocarbon group (iv-1) are 7.6 $(J/cm^3)^{1/2}$ and 15.9 $(J/cm^3)^{1/2}$, respectively.

In the formula (v), in view of further improvement of the hygroscopicity and the scratch resistance, the following is preferable:

$R^{51}$ and $R^{52}$ are each independently a monovalent hydrophilic group selected from the group consisting of a hydroxyl group, an amino group, a mercapto group, a sulfonic group and a carboxyl group, preferably a hydroxyl group or an amino group, more preferably a hydroxyl group;
$R^{51}$ and $R^{52}$ are preferably same groups;
n6 and n7 are each independently preferably an integer of 0 to 5, more preferably an integer of 0 to 3, further preferably an integer of 0 or 1, particularly preferably 1.

A specific example of the hydrophilic group-containing hydrocarbon group of the formula (v) is shown below.

[Chem. 6]

$$*N-(CH_2CH(OH)CH_2OH)_2 \qquad \text{(v-1)}$$

The Hansen solubility parameters δP and δH of the hydrophilic group-containing hydrocarbon group (v-1) are 10.4 $(J/cm^3)^{1/2}$ and 22.7 $(J/cm^3)^{1/2}$, respectively.

In the formula (vi), in view of further improvement of the hygroscopicity and the scratch resistance, the following is preferable; where the hydrophilic group-containing hydrocarbon group of the formula (vi) is a group which can be called an ammonium salt group:

each $R^{61}$ is a linear or branched alkyl group (especially a linear alkyl group) having 1 to 5, preferably 1 to 3 carbon atoms; where specific examples of such an alkyl group include, for example, a methyl group, an ethyl group, a propyl group, a butyl group, a pentyl group and the like, the $R^{61}$'s may be each independently selected, and all the $R^{61}$'s are preferably same groups; and
$A^-$ is an anion. The anion is a monovalent anion and may be, for example, $Cl^-$, $NO_3^-$, $SO_4^-$, $PO_4^-$ or the like. A preferable anion is $Cl^-$.

A specific example of the hydrophilic group-containing hydrocarbon group of the formula (vi) is shown below.

[Chem. 7] $*NMe_3^+Cl^-$ (vi-1)

The Hansen solubility parameters δP and δH of the hydrophilic group-containing hydrocarbon group (vi-1) are 5.6 $(J/cm^3)^{1/2}$ and 4.7 $(J/cm^3)^{1/2}$, respectively.

In the invention, when a monovalent hydrophilic group alone has the δP and the δH which the hydrophilic group-containing hydrocarbon group has, the hydrophilic group-containing hydrocarbon group may be the monovalent hydrophilic group.

For example, the hygroscopic film may contain a polysiloxane having the monovalent hydrophilic group which has δP and δH in the above ranges.

For example, in the formula (I) below, $R^1$ may be the monovalent hydrophilic group.

For example, the coating composition may contain a silane having the monovalent hydrophilic group which has δP and δH in the above ranges and/or a derivative thereof.

For example, in the formula (Ia) below, $R^1$ may be the monovalent hydrophilic group.

When a monovalent hydrophilic group alone has the δP and the δH which the hydrophilic group-containing hydrocarbon group has, examples of the monovalent hydrophilic group include a carboxyl group, a mercapto group and the like.

The Hansen solubility parameters δP and δH of a carboxyl group are 10 $(J/cm^3)^{1/2}$ and 14 $(J/cm^3)^{1/2}$, respectively.

The Hansen solubility parameters δP and δH of a mercapto group are 6 $(J/cm^3)^{1/2}$ and 10.2 $(J/cm^3)^{1/2}$, respectively.

The polysiloxane contained in the hygroscopic film specifically contains a siloxane unit (I) represented by the following general formula (I).

[Chem. 8] $R^1_aR^2_bSiO_{(4\cdot\cdot a\ b)/2}$ (I)

In the formula (I), $R^1$ is a monovalent organic group selected from the group consisting of the hydrophilic group-containing hydrocarbon groups represented by the general formulae (i) to (vi) and is, in view of further improvement of the hygroscopicity and the scratch resistance, preferably a hydrophilic group-containing hydrocarbon group represented by the general formulae (i) and (iv) to (vi), more preferably a hydrophilic group-containing hydrocarbon group represented by the general formula (i), further preferably the hydrophilic group-containing hydrocarbon group represented by the general formula (i-1). When the siloxane unit (I) has more than one $R^1$, the $R^1$'s may be each independently selected from the group. Preferable $R^{11}$, $R^{12}$ and n1 in the general formula (i) are the same as the preferable $R^{11}$, $R^{12}$ and n1 listed above in the explanation of the formula (i).

$R^2$ is a monovalent hydrocarbon group. $R^2$ may be specifically a monovalent saturated or unsaturated aliphatic hydrocarbon group or may be a monovalent aromatic hydrocarbon group. In view of further improvement of the hygroscopicity and the scratch resistance, $R^2$ is preferably a monovalent saturated aliphatic hydrocarbon group or a monovalent aromatic hydrocarbon group, more preferably a monovalent saturated aliphatic hydrocarbon group. Examples of the monovalent saturated aliphatic hydrocarbon group include linear and branched alkyl groups having 1 to 10, preferably 1 to 7, more preferably 1 to 5, further preferably 1 to 3 carbon atoms. Specific examples of such an alkyl group include, for example, a methyl group, an ethyl group, a propyl group, a butyl group, a pentyl group, a hexyl group, a heptyl group, an octyl group, a nonyl group, a decyl group and the like. Examples of the monovalent unsaturated aliphatic hydrocarbon group include linear and branched alkenyl groups having 2 to 10, preferably 2 to 7, more preferably 2 to 5, further preferably 2 or 3 carbon atoms. Specific examples of such an alkenyl group include, for example, a vinyl group and the like. Examples of the monovalent aromatic hydrocarbon group include aryl groups having 6 to 14, preferably 6 to 10, more preferably 6 carbon atoms. Specific examples of such an aryl group include, for example, a phenyl group, a naphthyl group and the like. When the siloxane unit (I) has more than one $R^2$, the $R^2$'s may be each independently selected.

a is an integer of 1 or 2 and is, in view of further improvement of the hygroscopicity and the scratch resistance, preferably 1.

b is an integer of 0 to 2 and is, in view of further improvement of the hygroscopicity and the scratch resistance, preferably an integer of 0 or 1, more preferably 0.

The sum of a and b is an integer of 3 or less (especially 1 to 3) and is, in view of further improvement of the hygroscopicity and the scratch resistance, preferably an integer of 2 or less (especially 1 or 2), more preferably 1.

The polysiloxane generally contains the siloxane unit (I) in an amount of 10 mol% or more (namely 10 to 100 mol%) based on all the siloxane units constituting the polysiloxane and contains, in view of further improvement of the hygroscopicity and the scratch resistance and prevention of precipitation during the polysiloxane synthesis and repelling during the hygroscopic film formation, in an amount of preferably 20 mol% or more (namely 20 to 100 mol%), more preferably 40 mol% or more (namely 40 to 100 mol%), further preferably 60 mol% or more (namely 60 to 100 mol%), particularly preferably 70 mol% or more (namely 70 to 100 mol%), most preferably 70 to 95 mol%. The polysiloxane may contain two or more siloxane units (I) having different structures in the above range, and in this case, the total amount thereof is in the above range. Here, new problems of precipitation of the coating composition and repelling of the obtained hygroscopic film sometimes arose during the production process of the hygroscopic film even if a hygroscopic

film having excellent hygroscopicity and scratch resistance could be obtained. When the amount of the siloxane unit (I) is 40 mol% or more based on all the siloxane units constituting the polysiloxane, however, such problems of the precipitation of the coating composition and the repelling of the hygroscopic film can be sufficiently suppressed.

The siloxane unit (I) content of the polysiloxane can be measured, for example, by the following methods; solid $^{29}$SiNMR, solid $^{1}$HNMR and the like.

The polysiloxane may further contain a siloxane unit (II) represented by the following general formula (II).

[Chem. 9] $R^3{}_cSiO_{(4-c)/2}$ (II)

In the formula (II), $R^3$ is a monovalent hydrocarbon group. The monovalent hydrocarbon group as $R^3$ is the same as the monovalent hydrocarbon group as $R^2$ in the formula (I). Preferable $R^3$ is a monovalent saturated aliphatic hydrocarbon group or a monovalent aromatic hydrocarbon group, and $R^3$ is more preferably a hydrogen atom or a monovalent saturated aliphatic hydrocarbon group. Preferable monovalent saturated and unsaturated aliphatic hydrocarbon groups and preferable monovalent aromatic hydrocarbon groups as $R^3$ in the formula (II) are the same as the preferable monovalent saturated and unsaturated aliphatic hydrocarbon groups and the preferable monovalent aromatic hydrocarbon groups as $R^2$ in the formula (I), respectively. When the siloxane unit (II) has more than one $R^3$, the $R^3$'s may be each independently selected.

c is an integer of 3 or less (namely 0 to 3) and is, in view of further improvement of the hygroscopicity and the scratch resistance, preferably an integer of 2 or less (namely 0 to 2), more preferably 1 or 2, further preferably 2.

The siloxane unit (II) in which c is 2 can be called "a difunctional siloxane unit".

The siloxane unit (II) in which c is 1 can be called "a trifunctional siloxane unit".

The siloxane unit (II) in which c is 0 can be called "a tetrafunctional siloxane unit".

The siloxane unit (II) content of the polysiloxane based on all the siloxane units is generally the amount of all the siloxane units excluding the siloxane unit (I) content. The polysiloxane may contain two or more siloxane units (II) having different structures in the above range, and in this case, the total amount thereof is in the above range.

In view of further improvement of the hygroscopicity and the scratch resistance and prevention of precipitation during the polysiloxane synthesis and repelling during the hygroscopic film formation, the polysiloxane preferably contains, in addition to the siloxane unit (I), a difunctional siloxane unit and/or a trifunctional siloxane unit as the siloxane unit (II). In this case, the molar ratio of the siloxane unit (I) and the siloxane unit (II) (namely siloxane unit (I)/siloxane unit (II)) is 70/30 to 100/0, particularly preferably 75/25 to 100/0.

In view of still further improvement of the hygroscopicity and the scratch resistance and prevention of precipitation during the polysiloxane synthesis and repelling during the hygroscopic film formation, the polysiloxane preferably contains, in addition to the siloxane unit (I), a difunctional siloxane unit as the siloxane unit (II). In this case, the molar ratio of the siloxane unit (I) and the difunctional siloxane unit (namely siloxane unit (I)/difunctional siloxane unit) is 70/30 to 95/5, particularly preferably 75/25 to 90/10.

The hygroscopic film may contain one additive or more selected from the group consisting of an antioxidant, a UV absorber, an IR absorber, a leveling agent, inorganic particles, organic particles and a polymerization initiator. The additive content is not particularly limited, and for example, the amount of each additive may be 5 mass% or less based on the polysiloxane. The total additive content may be 10 mass% or less based on the polysiloxane.

The thickness of the hygroscopic film is generally 1 $\mu$m or more, preferably 10 $\mu$m or more, more preferably 100 $\mu$m or more. The upper limit of the thickness of the hygroscopic film is not particularly limited, and the thickness of the hygroscopic film may be, for example, 1000 $\mu$m or less.

When the laminate is used, for example, as the window component described below, the laminate preferably has a haze of 2% or less, more preferably a haze of 1% or less. The lower limit of the haze of the laminate in this case is not particularly limited.

The haze of the laminate is not the haze of the hygroscopic film alone but is the haze of the hygroscopic film and the substrate. As the haze, the value measured in accordance with JIS R 3212 is used.

When the laminate is used, for example, as the window component described below, the laminate preferably has a visible light transmittance of 75% or more, more preferably a visible light transmittance of 85% or more. The upper limit of the visible light transmittance of the laminate in this case is not particularly limited.

The visible light transmittance of the laminate is not the visible light transmittance of the hygroscopic film alone but is the visible light transmittance of the hygroscopic film and the substrate. As the visible light transmittance, the value measured in accordance with JIS R 3212 is used.

[Coating Composition for Forming Hygroscopic Film]

The coating composition for forming a hygroscopic film (sometimes simply called "coating composition" below) of the invention contains a silane having the hydrophilic group-containing hydrocarbon group and/or a derivative thereof.

The derivatives include a silane oligomer such as a dimer of silane (namely disiloxane). Specifically, the coating composition of the invention contains a silane-based material having a hydrophilic group-containing hydrocarbon group (for example, a silane and/or a silane oligomer such as disiloxane).

The silane having a hydrophilic group-containing hydrocarbon group includes a silane having a structural formula containing the siloxane unit (I) such as a silane (Ia) represented by the following general formula (Ia).

[Chem. 10] $R^1_aR^2_bSi\ (OR^{101})_{(4-a-b)}$ (Ia)

In the formula (Ia), $R^1$ is a monovalent organic group selected from the group consisting of the hydrophilic group-containing hydrocarbon groups represented by the general formulae (i) to (vi) and is, in view of further improvement of the hygroscopicity and the scratch resistance, preferably a hydrophilic group-containing hydrocarbon group represented by the general formulae (i) and (iv) to (vi), more preferably a hydrophilic group-containing hydrocarbon group represented by the general formula (i), further preferably the hydrophilic group-containing hydrocarbon group represented by the general formula (i-1). When the silane (Ia) has more than one $R^1$ in one molecule, the $R^1$'s may be each independently selected from the group. Preferable $R^{11}$, $R^{12}$ and n1 in the general formula (i) are the same as the preferable $R^{11}$, $R^{12}$ and n1 listed above in the explanation of the formula (i).

In the formula (Ia), $R^2$ is a monovalent hydrocarbon group. The monovalent hydrocarbon group as $R^2$ is the same as the monovalent hydrocarbon group as $R^2$ in the formula (I). Preferable $R^2$ is a monovalent saturated aliphatic hydrocarbon group or a monovalent aromatic hydrocarbon group, and $R^2$ is more preferably a hydrogen atom or a monovalent saturated aliphatic hydrocarbon group. Preferable monovalent saturated and unsaturated aliphatic hydrocarbon groups and preferable monovalent aromatic hydrocarbon groups as $R^2$ in the formula (Ia) are the same as the preferable monovalent saturated and unsaturated aliphatic hydrocarbon groups and the preferable monovalent aromatic hydrocarbon groups as $R^2$ in the formula (I), respectively. When the silane (Ia) has more than one $R^2$ in one molecule, the $R^2$'s may be each independently selected.

In the formula (Ia), $R^{101}$ is a hydrogen atom or a monovalent hydrocarbon group. The monovalent hydrocarbon group as $R^{101}$ is the same as the monovalent hydrocarbon group as $R^2$ in the formula (I). Preferable $R^{101}$ is a hydrogen atom, a monovalent saturated aliphatic hydrocarbon group or a monovalent aromatic hydrocarbon group, and $R^{101}$ is more preferably a hydrogen atom or a monovalent saturated aliphatic hydrocarbon group. Preferable monovalent saturated and unsaturated aliphatic hydrocarbon groups and preferable monovalent aromatic hydrocarbon groups as $R^{101}$ in the formula (Ia) are the same as the preferable monovalent saturated and unsaturated aliphatic hydrocarbon groups and the preferable monovalent aromatic hydrocarbon groups as $R^2$ in the formula (I), respectively. When the silane (Ia) has more than one $R^{101}$ in one molecule, the $R^{101}$' s may be each independently selected.

In the formula (Ia), a is an integer of 1 or 2 and is, in view of further improvement of the hygroscopicity and the scratch resistance, preferably 1.

b is an integer of 0 to 2 and is, in view of further improvement of the hygroscopicity and the scratch resistance, preferably an integer of 0 or 1, more preferably 0.

The sum of a and b is an integer of 3 or less (especially 1 to 3) and is, in view of further improvement of the hygroscopicity and the scratch resistance, preferably an integer of 2 or less (especially 1 or 2), more preferably 1.

The derivatives of the silane having a hydrophilic group-containing hydrocarbon group include a silane oligomer such as a dimer of the silane (Ia) (namely disiloxane). Specifically, a dimer of the silane (Ia) is generally a disiloxane obtained by dehydration condensation of two silane (Ia) molecules in which the number of $OR^{101}$ groups (namely "4-a-b") in one molecule is an integer of 1 or more, especially an integer of 2 or more (namely 2 or 3) (preferably 3) of the silane (Ia) above.

Examples of the derivative of the silane having a hydrophilic group-containing hydrocarbon group include a disiloxane (Ia') represented by the following general formula (Ia').

[Chem. 11] $R^1_aR^2_bSi(OR^{101})_{(3-a-b)}\text{-O-}Si(OR^{101})_{(3-a-b)}R^1_aR^2_b$ (Ia')

In the formula (Ia'), $R^1$ is the same as $R^1$ in the general formula (Ia). Preferable $R^1$ is the same as the preferable $R^1$ in the general formula (Ia). When the disiloxane (Ia') has more than one $R^1$ in one molecule, the $R^1$'s may be each independently selected.

In the formula (Ia'), $R^2$ is the same as $R^2$ in the general formula (Ia). Preferable $R^2$ is the same as the preferable $R^2$ in the general formula (Ia). When the disiloxane (Ia') has more than one $R^2$ in one molecule, the $R^2$'s may be each independently selected.

In the formula (Ia'), $R^{101}$ is the same as $R^{101}$ in the general formula (Ia). Preferable $R^{101}$ is the same as the preferable $R^{101}$ in the general formula (Ia). When the disiloxane (Ia') has more than one $R^{101}$ in one molecule, the $R^{101}$' s may be each independently selected.

In the formula (Ia'), a is an integer of 1 or 2 and is, in view of further improvement of the hygroscopicity and the

scratch resistance, preferably 1.

b is an integer of 0 to 2 and is, in view of further improvement of the hygroscopicity and the scratch resistance, preferably an integer of 0 or 1, more preferably 0.

The sum of a and b is an integer of 3 or less (especially 1 to 3) and is, in view of further improvement of the hygroscopicity and the scratch resistance, preferably an integer of 2 or less (especially 1 or 2), more preferably 1.

Specific examples of the silane (Ia) and the derivative thereof are shown below.

[Chem. 12A]

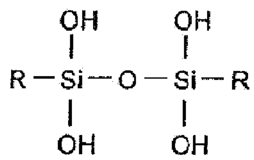

(Ia-1)

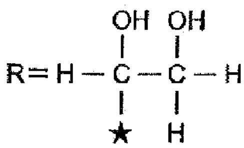

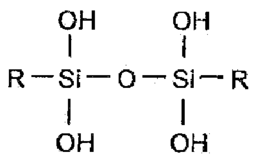

(Ia-2)

$R = \star - NH - C_2H_4 - NH_2$

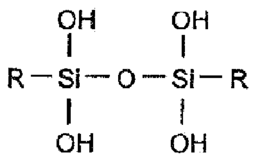

(Ia-3)

$R = \star - N - (CH_2CH(OH)CH_2OH)_2$

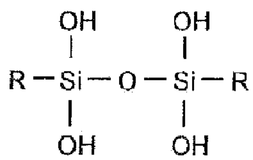

(Ia-4)

$R = \star - NMe_3^+Cl^-$

(In the formulae, the stars represent bonds.)

[Chem. 12B]

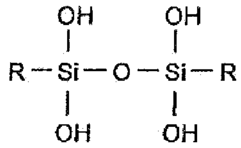

(Ia-5)

R=COOH

The silane (Ia) and the derivative thereof can be obtained as commercial products or can also be produced by a known method.

Examples of the commercial product of the silane (Ia) and the derivative thereof include an alkylene glycol silane (product name "X-12-1098"; manufactured by Shin-Etsu Chemical Co., Ltd.), a carboxyl silane (product name "X-12-1135"; manufactured by Shin-Etsu Chemical Co., Ltd.), an ethylenediamine silane (product name "KBP64"; manufactured by Shin-Etsu Chemical Co., Ltd.), an amino alcohol silane (product name "X-12-1121"; manufactured by Shin-Etsu Chemical Co., Ltd.) and a quaternary ammonium silane (product name "X-12-1126"; manufactured by Shin-Etsu Chemical Co., Ltd.).

The alkylene glycol silane ("X-12-1098"; manufactured by Shin-Etsu Chemical Co., Ltd.) is a compound belonging to a silane derivative having a hydrophilic group-containing hydrocarbon group and is the disiloxane compound represented by the structural formula (Ia-1).

The ethylenediamine silane (product name "KBP64"; manufactured by Shin-Etsu Chemical Co., Ltd.) is a compound belonging to a silane derivative having a hydrophilic group-containing hydrocarbon group and is the disiloxane compound represented by the structural formula (Ia-2).

The amino alcohol silane (product name "X-12-1121"; manufactured by Shin-Etsu Chemical Co., Ltd.) is a compound belonging to a silane derivative having a hydrophilic group-containing hydrocarbon group and is the disiloxane compound represented by the structural formula (Ia-3).

The quaternary ammonium silane (product name "X-12-1126"; manufactured by Shin-Etsu Chemical Co., Ltd.) is a compound belonging to a silane derivative having a hydrophilic group-containing hydrocarbon group and is the disiloxane compound represented by the structural formula (Ia-4).

The carboxyl silane (product name "X-12-1135"; manufactured by Shin-Etsu Chemical Co., Ltd.) is a compound belonging to a silane derivative having a hydrophilic group and is the disiloxane compound represented by the structural formula (Ia-5) .

The coating composition contains the silane (Ia) and/or the derivative thereof in such an amount that the polysiloxane formed from the coating composition contains the siloxane unit (I) in the above range based on all the siloxane units constituting the polysiloxane.

The coating composition may further contain a silane (IIa) represented by the following general formula (IIa).

[Chem. 13] $R^3_cSi\ (OR^{201})_{(4-c)}$ (II a)

In the formula (IIa), $R^3$ is a monovalent hydrocarbon group. The monovalent hydrocarbon group as $R^3$ is the same as the monovalent hydrocarbon group as $R^2$ in the formula (I). Preferable $R^3$ is a monovalent saturated aliphatic hydrocarbon group or a monovalent aromatic hydrocarbon group, and $R^3$ is more preferably a hydrogen atom or a monovalent saturated aliphatic hydrocarbon group. Preferable monovalent saturated and unsaturated aliphatic hydrocarbon groups and preferable monovalent aromatic hydrocarbon groups as $R^3$ in the formula (IIa) are the same as the preferable monovalent saturated and unsaturated aliphatic hydrocarbon groups and the preferable monovalent aromatic hydrocarbon groups as $R^2$ in the formula (I), respectively. When the silane (IIa) has more than one $R^3$ in one molecule, the $R^3$'s may be each independently selected.

In the formula (IIa), $R^{201}$ is a hydrogen atom or a monovalent hydrocarbon group. The monovalent hydrocarbon group as $R^{201}$ is the same as the monovalent hydrocarbon group as $R^2$ in the formula (I). Preferable $R^{201}$ is a hydrogen atom, a monovalent saturated aliphatic hydrocarbon group or a monovalent aromatic hydrocarbon group, and $R^{201}$ is more preferably a hydrogen atom or a monovalent saturated aliphatic hydrocarbon group. Preferable monovalent saturated and unsaturated aliphatic hydrocarbon groups and preferable monovalent aromatic hydrocarbon groups as $R^{201}$ in the formula (Ia) are the same as the preferable monovalent saturated and unsaturated aliphatic hydrocarbon groups and the preferable monovalent aromatic hydrocarbon groups as $R^2$ in the formula (I), respectively. When the silane (IIa) has more than one $R^{201}$ in one molecule, the $R^{201}$' s may be each independently selected.

In the formula (IIa), c is an integer of 3 or less (namely 0 to 3) and is, in view of further improvement of the

hygroscopicity and the scratch resistance, preferably an integer of 2 or less (namely 0 to 2), more preferably 1 or 2, further preferably 2.

The silane (IIa) in which c is 2 can be called a "difunctional silane".

The silane (IIa) in which c is 1 can be called a "trifunctional silane".

The silane (IIa) in which c is 0 can be called a "tetrafunctional silane".

Specific examples of the silane (IIa) are shown below.

- Difunctional silanes

    Dimethyldimethoxysilane
    Dimethyldiethoxysilane
    Diethyldimethoxysilane
    Diethyldiethoxysilane

- Trifunctional silanes

    Monomethyltrimethoxysilane
    Monomethyltriethoxysilane
    Monoethyltrimethoxysilane
    Monoethyltriethoxysilane

The silane (IIa) can be obtained as a commercial product or can also be produced by a known method.

Examples of the commercial product of the silane (IIa) include "KBM-22" (dimethyldimethoxysilane, manufactured by Shin-Etsu Chemical Co., Ltd., a difunctional silane), "KBM-13" (monomethyltrimethoxysilane, manufactured by Shin-Etsu Chemical Co., Ltd., a trifunctional silane), "KBE-22" (dimethyldiethoxysilane, manufactured by Shin-Etsu Chemical Co., Ltd., a difunctional silane), "KBE-13" (monomethyltriethoxysilane, manufactured by Shin-Etsu Chemical Co., Ltd., a trifunctional silane) and the like.

When the desired polysiloxane contains the siloxane unit (II), the coating composition contains the silane (IIa) in such an amount that the polysiloxane formed from the coating composition contains the siloxane unit (II) in the above range based on all the siloxane units constituting the polysiloxane. In a preferable embodiment, the coating composition contains the silane (Ia) and/or the derivative thereof (for example, the disiloxane (Ia')) and the silane (IIa) in such amounts that the polysiloxane formed from the coating composition contains the siloxane unit (I) and the siloxane unit (II) at the above molar ratio (siloxane unit (I)/siloxane unit (II)). In a more preferable embodiment, the coating composition contains the silane (Ia) and/or the derivative thereof (for example, the disiloxane (Ia')) and the silane (IIa) in such amounts that the polysiloxane formed from the coating composition contains the siloxane unit (I) and the difunctional siloxane unit at the above molar ratio (siloxane unit (I)/difunctional siloxane unit). The ratio of the silane (Ia) (including the disiloxane (Ia')) and the silane (IIa) (for example, the difunctional silane or the trifunctional silane) in the coating composition is generally directly reflected to the ratio of the siloxane unit (I) and the siloxane unit (II) (for example, the difunctional siloxane unit or the trifunctional siloxane unit) in the polysiloxane.

The coating composition may generally further contain a solvent.

In view of the coating property, the boiling point of the solvent is preferably 60 to 160°C, more preferably 70 to 90°C.

The kind of the solvent is not particularly limited as long as the solvent does not affect the storage of the polysiloxane, and examples thereof include polar organic solvents such as ethanol, methanol and IPA and water. In view of the solubility, the solvent preferably contains at least one polar organic solvent or more or water.

The solvent content of the coating composition is not particularly limited and is generally such an amount that the total amount of the silane (Ia) (including the disiloxane (Ia')) and the silane (IIa) based on the total amount of the coating composition becomes 5 to 80 mass%, preferably 10 to 50 mass%.

The coating composition may further contain the above additive.

[Production Method of Laminate]

(Direct Coating Method)

The laminate can be produced by coating a substrate with a coating composition by a direct coating method and then curing. Specifically, first, the coating composition is prepared. Next, after the substrate is coated with the coating composition, the coating composition is cured to form a hygroscopic film, and thus the laminate can be obtained.

In the preparation step of the coating composition, in general, the silane (Ia) (including the disiloxane (Ia')) and

a solvent are mixed. When the silane (IIa) is used, first, in view of advancing the hydrolysis reaction of the silane (IIa), the silane (IIa) is mixed with an acid component, and then the silane (Ia) (including the disiloxane (Ia')) and the solvent are added thereto and mixed. The acid component is not particularly limited as long as the coating composition can be adjusted to an acidic condition, and examples thereof include acetic acid, formic acid, propionic acid, fumaric acid, butyric acid and the like. The preparation step may be generally conducted at room temperature (for example, 15 to 25°C).
In the coating step of the coating composition, the coating method is not particularly limited as long as the coating composition can be adhered or applied on at least a part of the substrate surface, and examples thereof include flow coating method, drop casting method, spin coating method, bar coating method, spray coating method, curtain coating method, dip coating method, die coating method and the like.
In the curing step of the coating composition, the coating composition is once dried (for example, provisionally burned) and then cured by heating (for example, baking) or light application. The curing is curing reaction based on the formation reaction of a siloxane bond (namely dehydration condensation reaction).
The heating temperature and the heating period are not particularly limited as long as curing is achieved.
For example, the heating temperature may be 120°C or higher, especially 120 to 250°C.
Moreover, for example, the heating period is appropriately set depending on the heating temperature, and in the case of 150 to 200°C, the heating period may be 0.5 to 5 hours, especially 1 to 3 hours.
The applied light and the application period are not particularly limited as long as curing is achieved.
For example, the applied light may be active energy ray.
Moreover, for example, the applied light may be light with the application condition of a wavelength range of 200 nm or more and 400 nm or less, and the illuminance and the integrated light intensity may be 100 to 500 $mW/cm^2$ and 100 to 1000 $mJ/cm^2$, respectively.

(Transfer Method)

The laminate can be produced by transferring a coating composition on a transparent material to a substrate by a transfer method and then curing. Specifically, first, the coating composition is prepared. Next, the transparent material is coated with the coating composition. The transparent material is laid on the substrate in such a manner that the surface coated with the coating composition comes into contact with the substrate, and then light is applied from the transparent material side. As a result, the coating composition is cured, and the coating composition is transferred to the substrate. Thereafter, by peeling off the transparent material, a hygroscopic film is formed on the substrate, and thus the laminate can be obtained.
The preparation step of the coating composition in the transfer method is the same as the preparation step of the coating composition in the direct coating method.
The coating step of the coating composition in the transfer method is the same as the coating step of the coating composition in the direct coating method except that the coating composition is applied to the transparent material. The transparent material is not particularly limited as long as the transparent material can transmit the applied light in the curing step and may be composed of, for example, glass, polyester such as polyethylene terephthalate and polybutylene terephthalate or the like. The thickness of the transparent material is not particularly limited as long as peeling is possible and may be, for example, 100 μm to 50 mm.
The curing step of the coating composition in the transfer method is the same as the curing step of the coating composition in the direct coating method except that curing is conducted by applying light from the transparent material side.

(Vapor Deposition Method)

The laminate can be produced by depositing a coating composition on a substrate by a vapor deposition method and then curing. Specifically, first, the coating composition is prepared. Next, after the coating composition is deposited on the substrate by a vapor deposition method, the coating composition is cured to form a hygroscopic film, and thus the laminate can be obtained.
The preparation step of the coating composition in the vapor deposition method is the same as the preparation step of the coating composition in the direct coating method.
In the vapor deposition step of the coating composition, examples of the vapor deposition method include chemical vapor deposition (CVD) method and the like.
The curing step of the coating composition in the vapor deposition method is the same as the curing step of the coating composition in the direct coating method.

Examples

(Examples A1 to A6 and B1 to B4 and Comparative Example 2)

An alkylene glycol silane, a difunctional silane and a trifunctional silane were used at the ratios and in the amounts shown in Table 1 and Table 2.
As the alkylene glycol silane, product name "X-12-1098" (manufactured by Shin-Etsu Chemical Co., Ltd.) was used. The alkylene glycol silane is a compound belonging to a silane derivative having a hydrophilic group-containing hydrocarbon group and is the disiloxane compound represented by the structural formula (Ia-1).
As the difunctional silane, product name "KBM-22" (chemical name: dimethyldimethoxysilane, manufactured by Shin-Etsu Chemical Co., Ltd.) was used.
As the trifunctional silane, product name "KBM-13" (chemical name: monomethyltrimethoxysilane, manufactured by Shin-Etsu Chemical Co., Ltd.) was used.
The details of the operation method were as follows (see Fig. 1). Fig. 1 is a flow diagram for explaining the operation method for producing a hygroscopic film.

- The difunctional silane and/or the trifunctional silane and an acetic acid solution (5 mM) were fed into a glass container and mixed (20°C).
- A stirrer tip was put into the solution obtained by mixing, and the container was stoppered, followed by stirring for 30 minutes (20°C).
- The concentrated alkylene glycol silane (weight ratio, water:silane = 1:1) and ethanol were added, and thus a coating composition was obtained (20°C).
- A glass base plate (Young's modulus of 72 GPa and a thickness of 2 mm) which was degreased with IPA (isopropyl alcohol) was coated with the coating composition using a bar coater (120 μm) in such a manner that the thickness after baking would become 10 to 20 μm.
- After provisional burning (60°C × 2 hours), the glass base plate having the coating film was baked (180°C × 2 hours) to form a polysiloxane hygroscopic film (a thickness of 10 μm), and thus a laminate was obtained.

(Comparative Example 1)

Polyvinyl alcohol (manufactured by Tokyo Chemical Industry Co., Ltd.) and distilled water were fed into a glass container and mixed.
A stir bar was put into the solution obtained by mixing, and the container was stoppered, followed by stirring for 30 minutes to obtain a coating composition.
A glass base plate which was degreased with IPA (isopropyl alcohol) was coated with the coating composition using a bar coater (120 μm) in such a manner that the thickness after drying would become 10 μm.
The glass base plate having the coating film was dried (70°C × 3 hours) to form a polyvinyl alcohol hygroscopic film, and thus a laminate was obtained.

(Hardness)

The pencil hardness of the hygroscopic film of each laminate was determined in accordance with JIS K5600.

(Hygroscopicity)

The water absorption rate of the hygroscopic film of each laminate was measured by the following method.
Specifically, the weight of the glass base plate having the hygroscopic film (called a sample below) was measured on a scale in an environment of a humidity of 20% RH, and the weight of the hygroscopic film was calculated from the weight of the glass base plate alone which was measured in advance.
The sample was maintained in a constant temperature and constant humidity environment at 95% RH (setting temperature: 30°C) for one to two hours, and then the weight change of the sample was measured on a scale to determine the water absorption amount of the hygroscopic film.
The water absorption rate was calculated from the weight of the hygroscopic film and the water absorption amount of the hygroscopic film based on the following equation.

[Math. 1]

$$\text{Water Absorption Rate} = \text{Water Absorption Amount of Hygroscopic Film}/\text{Weight of Hygroscopic Film}$$

The hygroscopicity was assessed based on the water absorption rate.

A: $0.15 \leq$ water absorption rate (best)
B: $0.10 \leq$ water absorption rate $< 0.15$ (good)
C: $0.05 \leq$ water absorption rate $< 0.10$ (without practical problem)
D: water absorption rate $< 0.05$ (with practical problem)

(Scratch Resistance)

The scratch resistance value of the hygroscopic film of each laminate was measured by the following method.
Specifically, a scratch test using an indenter was conducted, and the scratch resistance performance was assessed. The shape of the scratch after scratching is observed, and the scratch depth is defined as the plastic deformation depth and used as a parameter for the scratch resistance performance. The scratch resistance performance is defined by the equation (1) and used as the scratch resistance value. A higher scratch resistance value means that the scratch resistance is high and that the material is not easily scratched.

[Math. 2]

$$\text{Scratch Resistance Value [GPa]} = (\text{Test Load [N]})/(2.5981 \times \text{Plastic Deformation Depth [m]}) = (\text{Test Load [N]})/(\text{Projected Contact Area [m}^2\text{]}) \ldots \text{Equation (1)}$$

The scratch resistance was assessed based on the scratch resistance value.

A: $1.00 \times 10^4 \leq$ scratch resistance value (best)
B: $1.00 \times 10^3 \leq$ scratch resistance value $< 1.00 \times 10^4$ (good)
C: $1.00 \times 10^2 \leq$ scratch resistance value $< 1.00 \times 10^3$ (without practical problem)
D: scratch resistance value $< 1.00 \times 10^2$ (with practical problem)

In the scratch test using the laminate of Example A2, the relations between the scratch distance and the penetration depth were measured during scratching and after scratching and were shown in Fig. 2.
In the scratch test using the laminate of Comparative Example 1, the relations between the scratch distance and the penetration depth were measured during scratching and after scratching and were shown in Fig. 3.
From Fig. 2 and Fig. 3, it is clear that, while the penetration depth is larger during scratching in the laminate of Example A2 (the invention), the plastic deformation depth is smaller after scratching. This indicates that the hygroscopic film of the laminate of the invention has sufficiently excellent scratch resistance.

(Overall Assessment)

The assessment results of the hygroscopicity and the scratch resistance were comprehensively assessed.

A: The assessment results of the hygroscopicity and the scratch resistance were A.
B: The lowest assessment result of the assessment results of the hygroscopicity and the scratch resistance was B.
C: The lowest assessment result of the assessment results of the hygroscopicity and the scratch resistance was C.
D: The lowest assessment result of the assessment results of the hygroscopicity and the scratch resistance was D.

(Appearance of Solution after Stirring)

The appearance of each coating composition as a solution was visually assessed.
A "transparent" solution means that the uncontrolled behavior of the dehydration condensation reaction (namely the reaction for forming a siloxane bond) has been sufficiently suppressed during the production stage of the solution.
An "opaque" solution means that the dehydration condensation reaction (namely the reaction for forming a siloxane bond) has gone out of control and has not been sufficiently suppressed during the production stage of the solution.

(State after Baking)

The appearance of each hygroscopic film obtained after baking was visually assessed.
A "clean film" refers to a film without repelling and means that the uncontrolled behavior of the dehydration condensation reaction (namely the reaction for forming a siloxane bond) has been sufficiently suppressed during the baking stage of the hygroscopic film.
"Repelling" means a film with repelling and means that the dehydration condensation reaction (namely the reaction for forming a siloxane bond) has gone out of control and has not been sufficiently suppressed during the baking stage of the hygroscopic film.

[Table 1]

| | Molar Ratio | | | Stirring Period | Difunctional Silane/ Trifunctional Silane | Aqueous Acetic Acid Solution (5 mM) | Total Aqueous Alkylene Glycol Silane Solution Amount (Silane Component Amount) | Ethanol | Appearance of Solution after Stirring | State after Baking | Base Plate | Siloxane Unit (I) Content (mol%)(2) | Hardness | Hygroscopicity | Scratch Resistance | Overall Assessment |
|---|---|---|---|---|---|---|---|---|---|---|---|---|---|---|---|---|
| | Alkylene Glycol Silane(1) | Difunctional Silane | Trifunctional Silane | | | | | | | | | | | | | |
| Example A1 | 1 | 0 | 0 | - | - | 0.3 g | 2.90 g (0.87 g, 3.3 mmol) | 3.51 g | Transparent | Clean Film | Glass | 100.0 | 3H | 0.15 A | 3.16 × $10^3$ B | B |
| Example A2 | 4 | 1 | 0 | 30 min | 0.1 g (0.83 mmol) | 0.2 g | 2.90 g (0.87 g, 3.3 mmol) | 3.21 g | Transparent | Clean Film | Glass | 88.9 | 3H | 0.18 A | 3.01 × $10^5$ A | A |
| Example A3 | 2 | 1 | 0 | 30 min | 0.2 g (1.67 mmol) | 0.4 g | 2.90 g (0.87 g, 3.3 mmol) | 3.81 g | Transparent | Clean Film | Glass | 80.0 | 3H | 0.17 A | 1.15 × 105 A | A |
| Example A4 | 1 | 1 | 0 | 30 min | 0.4 g (3.3 mmol) | 0.8 g | 2.90 g (0.87 g, 3.3 mmol) | 5.01 g | Transparent | Clean Film | Glass | 66.7 | 3H | 0.16 A | 2.17 × $10^2$ C | C |
| Example A5 | 1 | 2 | 0 | 30 min | 0.8 g (6.6 mmol) | 1.6 g | 2.90 g (0.87 g, 3.3 mmol) | 6.81 g | Transparent | Clean Film | Glass | 50.0 | 2H | 0.22 A | 3.20 × $10^2$ C | C |
| Example A6 | 1 | 4 | 0 | 30 min | 1.6 g (13.3 mmol) | 2.5 g | 2.90 g (0.87 g, 3.3 mmol) | 10.11 g | Transparent | Repelling | Glass | 33.3 | 2H | 0.17 A | 4.03 × $10^2$ C | C |

(1) Alkylene glycol silane = the disiloxane compound represented by the structural formula (Ia-1) ($\delta P$ = 13.5 $(J/cm^3)^{1/2}$, $\delta H$ = 27.4 $(J/cm^3)^{1/2}$)
(2) Ratio of the siloxane unit (I) having a hydrophilic group-containing hydrocarbon group to all the siloxane units

[Table 2]

| | Molar Ratio | | | Stirring Period | Difunctional Silane/ Trifunctional Silane | Aqueous Acetic Acid Solution (5 mM) | Total Aqueous Alkylene Glycol Silane Solution Amount (Silane Component Amount) | Ethanol | Appearance of Solution after Stirring | State after Baking | Base Plate | Siloxane Unit (I) Content (mol%)(2) | Hardness | Hygroscopicity | Scratch Resistance | Overall Assessment |
|---|---|---|---|---|---|---|---|---|---|---|---|---|---|---|---|---|
| | Alkylene Glycol Silane(1) | Difunctional Silane | Trifunctional Silane | | | | | | | | | | | | | |
| Example B1 | 4 | 0 | 1 | 30 min | 0.06 g (0.4 mmol) | 0.11 g | 1.45 g (0.435 g, 1.6 mmol) | 1.64 g | Transparent | Clean Film | Glass | 88.9 | 4H | 0.11 B | 5.70 × $10^4$ A | B |
| Example B2 | 2 | 0 | 1 | 30 min | 0.11 g (0.8 mmol) | 0.22 g | 1.45 g (0.435 g, 1.6 mmol) | 1.98 g | Transparent | Clean Film | Glass | 80.0 | 6H | 0.12 B | 6.85 × $10^4$ A | B |
| Example B3 | 1 | 0 | 1 | 30 min | 0.22 g (1.6 mmol) | 0.4 g | 1.45 g (0.435 g, 1.6 mmol) | 2.65 g | Transparent | Clean Film | Glass | 66.7 | 6H | 0.07 C | 2.48 × $10^5$ A | C |
| Example B4 | 1 | 0 | 2 | 30 min | 0.45 g (3.3 mmol) | 09. g | 1.45 g (0.435 g, 1.6 mmol) | 4.00 g | Transparent | Clean Film | Glass | 50.0 | 6H | 0.07 C | 1.68 × $10^6$ A | C |
| Comparative Example 1 | Polyvinyl Alcohol | | | - | - | - | - | - | Transparent | Clean Film | Glass | 0 | HB | 0.28 A | 3.79 D | D |
| Comparative Example 2 | 0 | 0 | 1 | 60 min | 2.72 g (20 mmol) | 5.45 g | - | 5.45 g | Transparent | Clean Film | Glass | 0 | 6H | 0.02 D | 3.30 × $10^6$ A | D |

(1) Alkylene glycol silane = the disiloxane compound represented by the structural formula (Ia-1) ($\delta P$ = 13.5 $(J/cm^3)^{1/2}$, $\delta H$ = 27.4 $(J/cm^3)^{1/2}$)
(2) Ratio of the siloxane unit (I) having a hydrophilic group-containing hydrocarbon group to all the siloxane units

Industrial Applicability

The laminate, the production method thereof and the coating composition for forming a hygroscopic film of the invention are useful for all applications in which hygroscopicity (for example, antifogging property and humidity-controlling property) is required.

For example, the laminate of the invention is useful as a vehicle component. Examples of the vehicle include an automobile, a truck, a bus, a train and the like. Examples of the vehicle component include vehicle window components such as a roof window, a windshield, quarter glass, rear door glass, rear quarter glass and a rear windshield and the like.

Moreover, for example, the laminate of the invention is useful as a building component. Examples of the building component include window components such as a window and the like.

The laminate of the invention is particularly preferably used as a vehicle component (for example, a vehicle window component (especially a vehicle window)). Here, the laminate of the invention preferably has the hygroscopic film on the entire surface of one side of the substrate (specifically, the entire interior surface of the substrate (especially a window)).

## Claims

**1.** A laminate having a substrate and a hygroscopic film formed on the surface of the substrate, wherein the hygroscopic film contains a polysiloxane having a hydrophilic group-containing hydrocarbon group in which the Hansen solubility parameters δP and δH satisfy the following relational expressions:

$3 \leq \delta P \leq 15$; and
$3 \leq \delta H \leq 40$.

**2.** The laminate according to claim 1,

wherein the polysiloxane contains a siloxane unit (I) represented by the following general formula (I):

[Chem. 1] $R^1_aR^2_bSiO_{(4-a-b)/2}$ (I)

[in the formula (I), $R^1$ is a monovalent organic group selected from the group consisting of hydrophilic group-containing hydrocarbon groups represented by the following general formulae (i) to (vi);
$R^2$ is a monovalent hydrocarbon group;
a is an integer of 1 or 2;
b is an integer of 0 to 2; and
the sum of a and b is an integer of 3 or less]:

[Chem. 2]

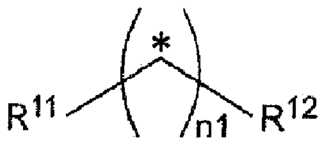

(i)

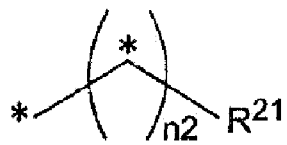

(ii)

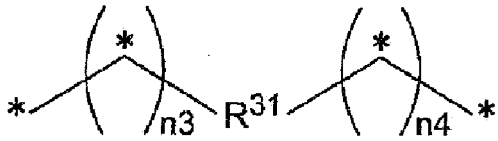

(iii)

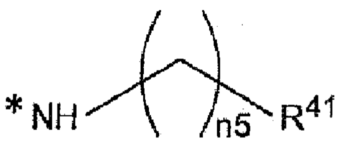

(iv)

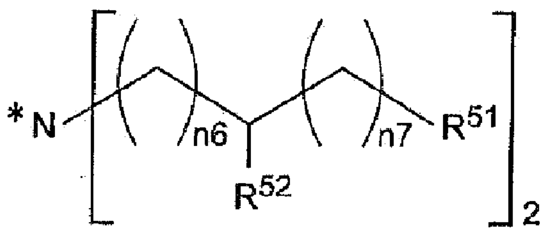

(v)

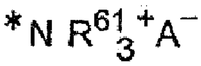

(vi)

[in the formulae (i) to (vi), $R^{11}$, $R^{12}$, $R^{21}$, $R^{41}$, $R^{51}$ and $R^{52}$ are each independently a monovalent hydrophilic group selected from the group consisting of a hydroxyl group, an amino group, a mercapto group, a sulfonic group and a carboxyl group;

$R^{31}$ is a divalent hydrophilic group selected from the group consisting of an imino group, a ketone group and an ether group;

$R^{61}$ is each independently a monovalent hydrocarbon group;

$A^-$ is an anion;

n1 and n5 are each independently an integer of 1 to 10;

n2, n3, n4, n6 and n7 are each independently an integer of 0 to 10;

* in the formulae (i) to (iii) represents that the carbon atom may have a bond; wherein when there is one carbon atom having * in one molecule, the carbon atom is directly bonded to the silicon atom of the siloxane unit; and when there are two or more carbon atoms having * in one molecule, any one carbon atom of the carbon atoms is directly bonded to the silicon atom of the siloxane unit; and

* in the formulae (iv) to (vi) represents nitrogen that the atom may have a bond; wherein the nitrogen atom having * is directly bonded to the silicon atom of the siloxane unit.]

**3.** The laminate according to claim 2, wherein the polysiloxane contains the siloxane unit (I) in an amount of 20 mol% or more based on all the siloxane units constituting the polysiloxane.

**4.** The laminate according to claim 2 or 3, wherein the polysiloxane further contains a siloxane unit (II) represented by

the following general formula (II):
[Chem. 3]

$$R^3_cSiO_{(4-c)/2} \qquad (II)$$

[in the formula (II), $R^3$ is a monovalent hydrocarbon group; and
c is an integer of 3 or less.]

**5.** The laminate according to any of claims 1 to 4, wherein the hygroscopic film contains one additive or more selected from the group consisting of an antioxidant, a UV absorber, an IR absorber, a leveling agent, inorganic particles, organic particles and a polymerization initiator.

**6.** The laminate according to any of claims 1 to 5,

wherein the substrate has Young's modulus of 1 GPa or more, and
the substrate and the hygroscopic film satisfy the relational expression of substrate thickness/hygroscopic film thickness $\geq$ 10.

**7.** The laminate according to any of claims 1 to 6, wherein the laminate exhibits a haze of 2% or less and a visible light transmittance of 75% or more.

**8.** The laminate according to any of claims 1 to 7, wherein the laminate is used as a vehicle window component.

**9.** A coating composition for forming a hygroscopic film containing a silane having a hydrophilic group-containing hydrocarbon group in which the Hansen solubility parameters $\delta P$ and $\delta H$ satisfy the following relational expressions and/or a derivative thereof:

$3 \leq \delta P \leq 15$; and
$3 \leq \delta H \leq 40$.

**10.** The coating composition for forming a hygroscopic film according to claim 9,

wherein the silane contains a silane (Ia) represented by the following general formula (Ia):

[Chem. 4] $$R^1_aR^2_bSi\,(OR^{101})_{(4-a-b)} \quad (Ia)$$

[in the formula (Ia), $R^1$ is a monovalent organic group selected from the group consisting of hydrophilic group-containing hydrocarbon groups represented by the following general formulae (i) to (vi);
$R^2$ is a monovalent hydrocarbon group;
$R^{101}$ is a hydrogen atom or a monovalent hydrocarbon group;
a is an integer of 1 or 2;
b is an integer of 0 to 2; and
the sum of a and b is an integer of 3 or less]:

[Chem. 5]

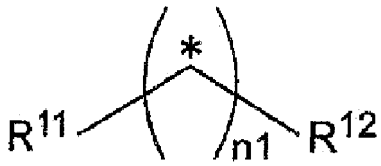

(i)

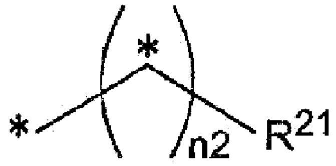

(ii)

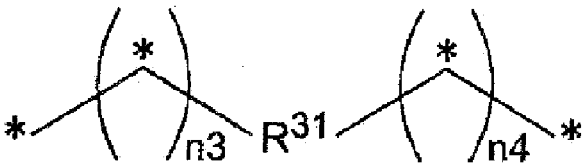

(iii)

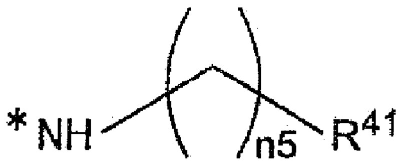

(iv)

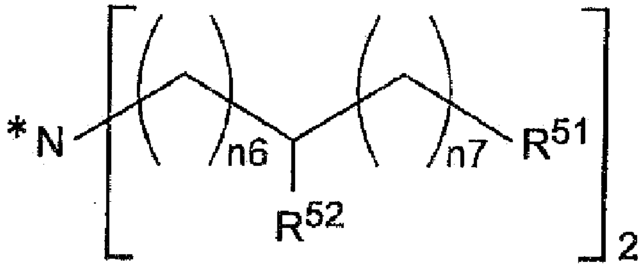

(v)

$$^{*}N\ R^{61}{}_{3}{}^{+}A^{-}$$ (vi)

[in the formulae (i) to (vi), $R^{11}$, $R^{12}$, $R^{21}$, $R^{41}$, $R^{51}$ and $R^{52}$ are each independently a monovalent hydrophilic group selected from the group consisting of a hydroxyl group, an amino group, a mercapto group, a sulfonic group and a carboxyl group;

$R^{31}$ is a divalent hydrophilic group selected from the group consisting of an imino group, a ketone group and an ether group;

$R^{61}$ is each independently a monovalent hydrocarbon group;

$A^{-}$ is an anion;

n1 and n5 are each independently an integer of 1 to 10;

n2, n3, n4, n6 and n7 are each independently an integer of 0 to 10;

* in the formulae (i) to (iii) represents that the carbon atom may have a bond; wherein when there is one carbon atom having * in one molecule, the carbon atom is directly bonded to the silicon atom of the siloxane unit; and when there are two or more carbon atoms having * in one molecule, any one carbon atom of the carbon atoms is directly bonded to the silicon atom of the siloxane unit; and

* in the formulae (iv) to (vi) represents nitrogen that the atom may have a bond; wherein the nitrogen atom having * is directly bonded to the silicon atom of the siloxane unit.]

**11.** The coating composition for forming a hygroscopic film according to claim 10, wherein the coating composition for forming a hygroscopic film contains the silane (Ia) and/or the derivative thereof in such an amount that the polysiloxane formed from the coating composition contains a siloxane unit (I) represented by the following general formula (I) in an amount of 20 mol% or more based on all the siloxane units constituting the polysiloxane:

[Chem. 6] $R^1_aR^2_bSiO_{(4-a-b)/2}$ (I)

[in the formula (I), $R^1$ is a monovalent organic group selected from the group consisting of the hydrophilic group-containing hydrocarbon groups represented by the general formulae (i) to (vi);

$R^2$ is a monovalent hydrocarbon group;
a is an integer of 1 or 2;
b is an integer of 0 to 2; and
the sum of a and b is an integer of 3 or less.]

**12.** The coating composition for forming a hygroscopic film according to claim 10 or 11,

wherein the coating composition for forming a hygroscopic film further contains a silane (IIa) represented by the following general formula (IIa):

[Chem. 7] $R^3_cSi\ (OR^{201})_{(4-c)}$ (IIa)

[in the formula (IIa), $R^3$ is a monovalent hydrocarbon group;
$R^{201}$ is a hydrogen atom or a monovalent hydrocarbon group; and
c is an integer of 3 or less.]

**13.** The coating composition for forming a hygroscopic film according to any of claims 9 to 12, wherein the coating composition further contains a solvent having a boiling point of 60 to 160°C.

**14.** The coating composition for forming a hygroscopic film according to claim 13, wherein the solvent contains at least one polar organic solvent or more or water.

**15.** The coating composition for forming a hygroscopic film according to any of claims 9 to 14 further containing one additive or more selected from the group consisting of an antioxidant, a UV absorber, an IR absorber, a leveling agent, inorganic particles, organic particles and a polymerization initiator.

**16.** A method for producing a laminate comprising coating a substrate with the coating composition for forming a hygroscopic film according to any of claims 9 to 15 and then curing the coating composition through heating at 120°C or higher or application of light to form a hygroscopic film.

**17.** A method for producing a laminate comprising coating a transparent material with the coating composition for forming a hygroscopic film according to any of claims 9 to 15, laying the transparent material on a substrate in such a manner that the coated surface comes into contact with the substrate and then transferring and curing the coating composition on the substrate by applying light from the transparent material side to form a hygroscopic film.

**18.** A method for producing a laminate comprising depositing the coating composition for forming a hygroscopic film according to any of claims 9 to 15 on a substrate by a vapor deposition method and then curing the coating composition through heating at 120°C or higher or application of light to form a hygroscopic film.

[FIG. 1]

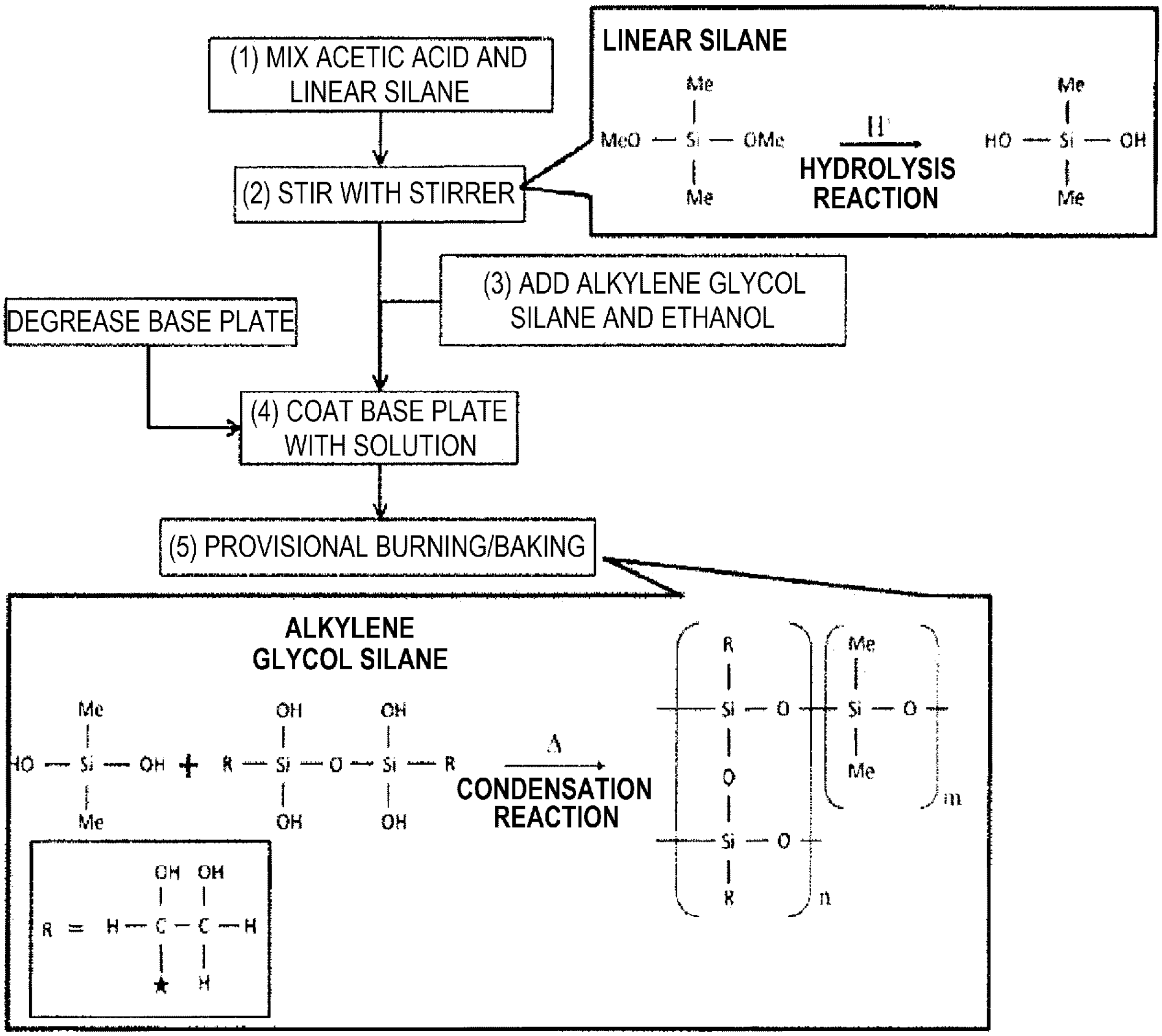
(1) MIX ACETIC ACID AND LINEAR SILANE
(2) STIR WITH STIRRER
LINEAR SILANE
HYDROLYSIS REACTION
(3) ADD ALKYLENE GLYCOL SILANE AND ETHANOL
DEGREASE BASE PLATE
(4) COAT BASE PLATE WITH SOLUTION
(5) PROVISIONAL BURNING/BAKING
ALKYLENE GLYCOL SILANE
CONDENSATION REACTION

[FIG. 2]

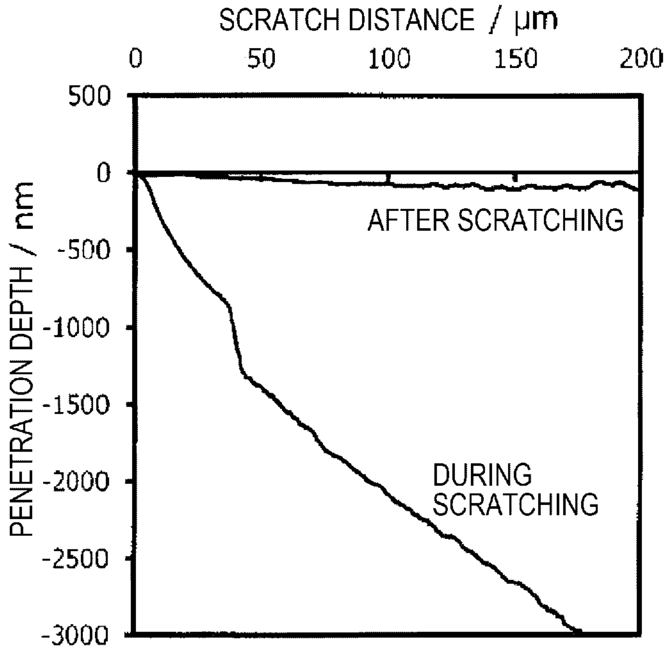
SCRATCH DISTANCE / μm
0
50
100
150
200
500
0
-500
-1000
-1500
-2000
-2500
-3000
PENETRATION DEPTH / nm
AFTER SCRATCHING
DURING SCRATCHING

[FIG. 3]

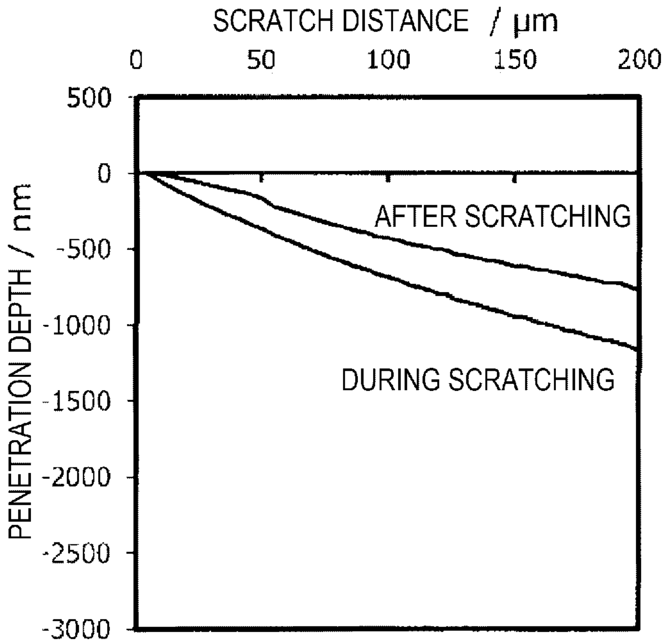
SCRATCH DISTANCE / μm
0
50
100
150
200
500
0
-500
-1000
-1500
-2000
-2500
-3000
PENETRATION DEPTH / nm
AFTER SCRATCHING
DURING SCRATCHING

**INTERNATIONAL SEARCH REPORT**

International application No. PCT/JP2021/002032

A. CLASSIFICATION OF SUBJECT MATTER
B32B 27/00(2006.01)i; C09D 183/04(2006.01)i; C09D 7/20(2018.01)i
FI: B32B27/00 101; C09D183/04; C09D7/20
According to International Patent Classification (IPC) or to both national classification and IPC

B. FIELDS SEARCHED
Minimum documentation searched (classification system followed by classification symbols)
B32B1/00-43/00; C09D183/04; C09D7/20; B05D1/00-7/26; C03C17/30

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2012-97171 A (LIXIL CORPORATION) 24 May 2012 (2012-05-24) claims, paragraphs [0015]-[0019], [0034], examples 1-12 | 1-16 |
| X | JP 2004-292754 A (CANON INC.) 21 October 2004 (2004-10-21) claims, paragraphs [0001], [0023], [0048]-[0049], examples 2, 5 | 1-3, 5-11, 13-16 |
| A | JP 2008-65155 A (SEIKO EPSON CORP.) 21 March 2008 (2008-03-21) claims, paragraph [0018] | 1-18 |
| A | JP 2001-64586 A (CCI CORP.) 13 March 2001 (2001-03-13) claims, paragraphs [0013]-[0014] | 1-18 |
| A | JP 11-172199 A (TOTO KIKI KABUSHIKI KAISHA) 29 June 1999 (1999-06-29) paragraph [0001], examples 1-3 | 1-18 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 March 2021 (31.03.2021) | 13 April 2021 (13.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/002032

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-123208 A (TOYOTA CENTRAL R&D LABS., INC.) 09 August 2018 (2018-08-09) claims, paragraphs [0013]-[0017] | 1-18 |

Form PCT/ISA/210 (continuation of second sheet) (January 2015)

**INTERNATIONAL SEARCH REPORT**
Information on patent family members

International application No.
PCT/JP2021/002032

| Patent Documents referred in the Report | Publication Date | Patent Family | Publication Date |
|---|---|---|---|
| JP 2012-97171 A | 24 May 2012 | (Family: none) | |
| JP 2004-292754 A | 21 Oct. 2004 | (Family: none) | |
| JP 2008-65155 A | 21 Mar. 2008 | (Family: none) | |
| JP 2001-64586 A | 13 Mar. 2001 | (Family: none) | |
| JP 11-172199 A | 29 Jun. 1999 | (Family: none) | |
| JP 2018-123208 A | 09 Aug. 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013183441 A
- JP 2012117025 A